(19) **Europäisches Patentamt** / **European Patent Office** / **Office européen des brevets**

(11) **EP 3 194 874 B1**

(12) **FASCICULE DE BREVET EUROPEEN**

(45) Date de publication et mention de la délivrance du brevet:
**10.10.2018 Bulletin 2018/41**

(21) Numéro de dépôt: **15771203.5**

(22) Date de dépôt: **11.09.2015**

(51) Int Cl.:
**F28F 3/14** *(2006.01)*     **F28D 15/02** *(2006.01)*
**F28F 21/08** *(2006.01)*

(86) Numéro de dépôt international:
**PCT/FR2015/052427**

(87) Numéro de publication internationale:
**WO 2016/042239 (24.03.2016 Gazette 2016/12)**

(54) **CALODUC ET PROCÉDÉ DE RÉALISATION D'UN CALODUC.**

WÄRMEROHR UND VERFAHREN ZUR HERSTELLUNG EINES WÄRMEROHRS

HEAT PIPE AND METHOD FOR MAKING A HEAT PIPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2014 FR 1458661**

(43) Date de publication de la demande:
**26.07.2017 Bulletin 2017/30**

(73) Titulaire: **Commissariat à l'Énergie Atomique et aux Énergies Alternatives
75015 Paris (FR)**

(72) Inventeur: **TANTOLIN, Christian
F-38660 Lumbin (FR)**

(74) Mandataire: **Talbot, Alexandre et al
Cabinet Hecké
28 Cours Jean Jaurès
38000 Grenoble (FR)**

(56) Documents cités:
**EP-A1- 2 687 319    WO-A1-2012/176133
CN-A- 102 141 351    FR-A1- 2 687 464
US-A1- 2012 273 167**

## Description

### Domaine technique de l'invention

L'invention est relative à un caloduc par gravité selon le préambule de la revendication 1 et à un procédé de réalisation d'un tel caloduc.
US 2012/273167 divulgue un tel caloduc.

### État de la technique

Les caloducs sont usuellement utilisés dans des applications en électronique de puissance pour refroidir des composants, comme par exemple des transistors, ou encore pour refroidir des microprocesseurs (sur les ordinateurs portables).
Les caloducs sont des dispositifs fermés contenant un liquide en équilibre avec sa phase vapeur. Le fluide est choisi en fonction de l'application et notamment des températures de fonctionnement. Ce fluide peut être par exemple de l'eau, un alcool, un alcane, de l'acétone, du mercure ou encore du sodium...
Dans une première partie du caloduc, l'évaporateur, le liquide est chauffé par une source extérieure en contact thermique avec l'évaporateur. Le liquide s'évapore jusqu'à une deuxième partie du caloduc, le condenseur, dans lequel la vapeur est condensée. Le condenseur est en contact thermique avec une source à réchauffer ou avec un élément permettant d'évacuer la chaleur transportée par le caloduc en provenance de l'évaporateur. Le condensat rejoint ensuite l'évaporateur soit par gravité (caloduc par gravité) soit par capillarité (caloduc capillaire). Le liquide subit, ensuite, un nouveau cycle d'évaporation/condensation.
Les caloducs sont des dispositifs passifs, robustes, présentant une grande durée de vie et ne nécessitant pas d'entretien spécifique. De ce fait, ils sont particulièrement, adaptés pour être insérés dans des capteurs solaires. De nombreuses recherches se sont tournées vers ce domaine d'application.
Le document FR2942030 décrit, par exemple, un caloduc pour capteur solaire (figure 1). L'énergie thermique, provenant de l'absorption du rayonnement solaire, est transmise à un ensemble de caloducs 54, et plus particulièrement, à la partie chaude 66 des caloducs 54. Ceci permet de chauffer le fluide du caloduc et de provoquer un changement de phase du fluide de caloduc 58, qui passe de l'état liquide à l'état gazeux. La vapeur s'élève dans la partie froide 68, à travers des canaux 70. La chaleur est alors transmise à un fluide caloporteur en contact thermique avec la partie froide 68. La température du fluide caloduc s'abaisse et le fluide retourne à l'état liquide. Il redescend alors, sous l'effet de la gravité, dans la partie chaude 66 où il pourra être de nouveau réchauffé.
Dans les caloducs, le condensat circule dans le sens condenseur-évaporateur alors que la vapeur circule dans le sens évaporateur-condenseur.

La circulation de la vapeur se fait donc à contre-courant de la circulation du liquide. La vapeur, de par sa vitesse, peut empêcher l'écoulement du liquide et s'opposer à son retour dans l'évaporateur : il s'agit de la limite d'entraînement.
Lorsque la vitesse de la vapeur devient élevée, elle tend à former des vagues sur la surface du liquide située directement à son contact. Avec l'amplification de ce phénomène, des gouttelettes de liquides sont arrachées par la vapeur et le phénomène peut devenir tel que l'écoulement liquide se trouve totalement interrompu, bloquant ainsi le fonctionnement du caloduc.
Cette limite est d'autant plus facilement atteinte que la puissance à transférer est élevée, i.e. les débits massiques et/ou volumiques des phases liquide et vapeur sont importants.
Ce problème d'entrainement se traduit par des problèmes d'alimentation en phase liquide de l'évaporateur et une instabilité du fonctionnement du caloduc.
Dans le cas d'un capteur solaire, cette instabilité du caloduc se traduit par des oscillations en température avec des amplitudes de plusieurs dizaines de degrés.
La puissance fournie par le caloduc n'est donc pas constante et les pertes thermiques vers l'extérieur sont augmentées, ce qui se traduit par une réduction des performances du capteur solaire.
Pour remédier à ce problème, une des solutions envisagées consiste à faire circuler les phases liquides et solides dans des canaux distincts.
Cette solution a été décrite par le document WO2012/176133 (figure 2). Les canaux 10 pour mener la vapeur de l'évaporateur au condenseur sont différents des canaux 8 permettant de conduire le condensat du condenseur à l'évaporateur. Une géométrie en forme de siphon, au niveau de la zone de condensation 6, permet de faciliter une circulation unidirectionnelle du fluide dans le circuit de circulation du caloporteur.
Cependant, une telle géométrie est difficile à réaliser, surtout au niveau du siphon où les canaux sont très fins. Des phénomènes de tensions superficielles peuvent également devenir prépondérant au niveau du siphon, pouvant ralentir l'écoulement du fluide et les performances du caloduc.

### Objet de l'invention

L'invention a pour but de remédier aux inconvénients de l'art antérieur et, en particulier, de proposer un caloduc par gravité présentant des performances améliorées et notamment, un bon écoulement fluide, à la fois en phase vapeur et en phase liquide.
On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

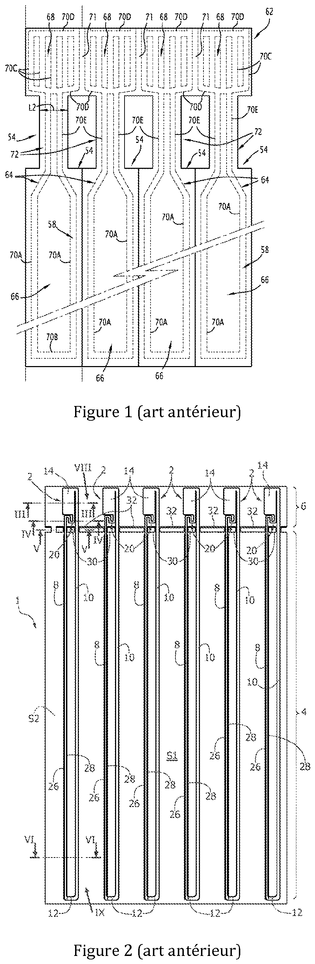

- les figures 1 et 2 représentent, de manière schématique, en coupe, des caloducs par gravité selon l'art antérieur,
- les figures 3 à 7 représentent de manière schématique, en coupe, des caloducs par gravité selon différents modes de réalisation de l'invention.

**Description d'un mode de réalisation préférentiel de l'invention**

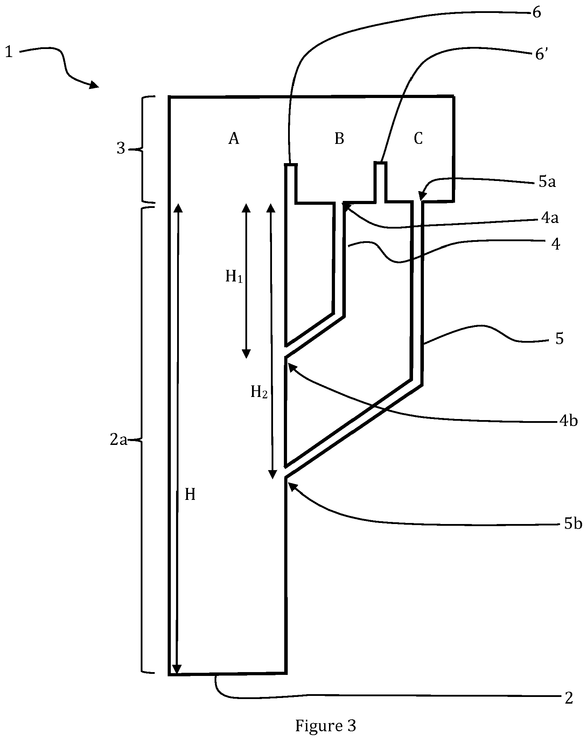

Comme illustré à la figure 3, le caloduc 1 comprend :

- un fluide thermique,
- un évaporateur 2, configuré pour faire évaporer le fluide thermique,
- un condenseur 3, configuré faire condenser le fluide thermique.

Le caloduc est un caloduc par gravité, aussi appelé caloduc gravitaire ou thermosiphon, c'est-à-dire que le retour du fluide thermique, une fois condensé sous forme la phase liquide, se fait sous l'effet de la gravité du condenseur 3 vers l'évaporateur 2. Le condenseur est positionné au-dessus de l'évaporateur pour que le retour du condensat puisse se faire par gravité. Par "au-dessus", on entend que le caloduc est suffisamment incliné (typiquement d'un angle minimal de 3 à 5° au moins par rapport à l'horizontale) pour ramener les condensats du condenseur vers l'évaporateur par gravité.

Le fluide thermique est choisi, par l'homme du métier, de manière à pouvoir passer de l'état liquide à l'état gazeux, et inversement, dans les conditions normales d'utilisation du caloduc.

Le fluide thermique circule dans le caloduc 1 en boucle fermée, passant successivement de l'évaporateur 2, l'extrémité dite chaude, où le fluide passe de l'état liquide à l'état gazeux, au condenseur 3, l'extrémité dite froide, où le fluide thermique passe de l'état gazeux à l'état liquide. Puis le fluide est, de nouveau évaporé, et les cycles d'évaporation/condensation continuent ainsi. Les phases gazeuse et liquide du fluide thermique sont constamment en équilibre thermodynamique dans le caloduc 1.

Pour apporter la chaleur nécessaire à l'évaporation du fluide, l'évaporateur est en contact thermique avec une source de chaleur. Dans certaines applications de type réfrigération, cette configuration permet de refroidir ladite source de chaleur. La source de chaleur peut être un composant à refroidir.

Le condenseur est en contact thermique avec un élément à chauffer ou d'un élément capable d'évacuer la chaleur fournie, qui est à une température inférieure à celle du fluide sous forme gazeuse pour obtenir la condensation du fluide. Le fluide, sous forme gazeuse, au contact de cet élément plus froid lui transfère sa chaleur, ce qui diminue la température du fluide, qui passe de nouveau en phase liquide. Avantageusement, le transfert de chaleur depuis le fluide thermique vers la cible permet de chauffer ladite cible. Le fluide peut être, par exemple, en contact thermique avec une réserve d'eau à chauffer.

L'évaporateur 2 est relié au condenseur 3 par au moins un canal d'évaporation. Le canal d'évaporation est configuré pour faire circuler le fluide thermique en phase vapeur depuis l'évaporateur 2 vers le condenseur 3. Au contact de la source chaude, le fluide thermique se réchauffe et se transforme en vapeur qui circule dans le canal d'évaporation.

Préférentiellement, le caloduc 1 comprend également au moins deux canaux de condensation 4, 5 du fluide thermique. Au contact du condenseur, le fluide thermique se refroidit et il passe en phase liquide. Le liquide se déplace vers l'évaporateur par gravité à travers les canaux de condensation. Les canaux de condensation permettent ici l'écoulement du fluide à l'état liquide.

Dans un mode de réalisation préférentiel, le caloduc par gravité est dépourvu de réseau capillaire. Par réseau capillaire, on entend toute géométrie permettant de développer une pression capillaire, telle que des tubes comportant des rainures axiales ou circonférentielles, des couches de tissus ou des tapis de films métalliques, des matériaux frittés, etc. Les parois internes du caloduc par gravité sont, avantageusement, lisses. Une telle architecture réduit, avantageusement, les coûts d'élaboration du caloduc.

De manière à augmenter la limite d'entrainement du caloduc, le condenseur est configuré pour faciliter la séparation du fluide thermique en phase liquide et en phase vapeur. Le fluide en phase vapeur se déplace exclusivement dans le canal d'évaporation depuis l'évaporateur vers le condensateur. Le fluide en phase liquide se déplace majoritairement dans les canaux de condensation. Une faible proportion de la phase liquide se déplace dans le canal d'évaporation.

Par canal, on entend un conduit permettant le passage d'un fluide.
Le canal de condensation présente des dimensions nettement inférieures aux dimensions du canal d'évaporation : la taille du canal de condensation représente de l'ordre de 5% à 40% de la taille du canal d'évaporation, en section.
Les canaux de condensation peuvent être de sections identiques ou différentes. La section du canal doit être dimensionnée en fonction du débit de condensat de la zone considérée. Avantageusement, les sections des canaux de condensation sont identiques ou sensiblement identiques. Par sensiblement identiques, on entend que les sections des différent ne diffèrent pas de plus de 20%, et, encore plus préférentiellement, pas plus de 10%.

Chaque canal de condensation 4, 5 est muni d'une première extrémité 4a, 5a et d'une deuxième extrémité 4b, 5b respectivement.

Les premières extrémités 4a, 5a des canaux de condensation 4, 5 sont connectées au condenseur 3, de manière à collecter le fluide thermique condensé. En d'autres termes, le condenseur alimente les canaux de condensation 4 et 5 en fluide thermique liquide.

Les deuxièmes extrémités 4b, 5b des canaux de condensation 4, 5 sont configurées pour déboucher dans le canal d'évaporation 2a à distance de l'évaporateur 2, de manière à pouvoir humidifier les parois de l'évaporateur 2 et au moins une partie de la ou des parois du canal d'évaporation 2a.

L'injection de fluide thermique en phase liquide est assurée en différents points du canal d'évaporation : à l'extrémité du canal d'évaporation mais également dans au moins une zone intermédiaire entre l'évaporateur et le condenseur. Cette configuration particulière permet d'humidifier les parois latérales évitant ainsi une élévation de température préjudiciable. Cela permet également de mieux répartir l'apport de phase liquide dans le canal d'évaporation et ainsi de conserver des valeurs limites d'entrainement élevées.

La présence de plusieurs canaux de condensation 4, 5 permet de fractionner le volume de fluide thermique condensé et de diriger les fractions de condensats indépendamment les unes des autres vers l'évaporateur 2.

L'utilisation de plusieurs canaux de condensation permet de réduire les phénomènes d'engorgement. L'engorgement d'un canal intervient lorsque la quantité de liquide générée dans le condenseur est supérieure au débit du canal de condensation. Le canal n'est plus en mesure d'assurer le transit de la phase liquide depuis le condenseur jusqu'à l'évaporateur et l'évaporateur n'a plus de fluide à évaporer. Ce fonctionnement est préjudiciable car les performances du caloduc évoluent en fonction de la quantité de liquide apportée à l'évaporateur.

Dans un mode de réalisation privilégié, les différents canaux de condensation sont disposés à des distances variables de l'évaporateur. La distance entre l'évaporateur et le canal de condensation représente la dimension la plus longue séparant ces deux points.

Le condenseur 3 et l'évaporateur 2 sont séparés d'une distance H selon un premier axe X. Avantageusement, la distance H correspond à la longueur du canal d'évaporation 2a.

La distance séparant le condenseur 3 et la sortie du canal de condensation 4b, 5b peut être représentée par la hauteur Hx, c'est-à-dire la hauteur de la deuxième extrémité dans le canal d'évaporation selon le premier axe. Le condenseur 3 correspondant à l'origine du premier axe.

Préférentiellement, la deuxième extrémité 4b du premier canal de condensation 4 est positionnée à une hauteur $H_1$ dans l'évaporateur 2 et la deuxième extrémité 5b du deuxième canal de condensation 5 est positionnée à une hauteur $H_2$ dans l'évaporateur 2.

Les hauteurs $H_1$ et $H_2$ sont différentes.

Par sont différentes, on entend que la deuxième extrémité 4b, 5b des canaux 4, 5 n'est pas située à la même hauteur dans le canal d'évaporation 2a, de manière à réinjecter le fluide condensé au niveau de différentes parties du canal d'évaporation 2a. Plusieurs zones du canal d'évaporation 2a peuvent ainsi être alimentée en phase liquide en même temps.

Si on considère que l'évaporateur 2 présente une hauteur H, la différence de hauteur entre $H_1$ et $H_2$ représente au moins 10% de la hauteur H, et encore plus préférentiellement, au moins 20%.

Par rapport à une structure où l'alimentation est uniquement réalisée par la base de l'évaporateur, cette distribution de fluide liquide sur plusieurs niveaux permet d'éviter que les parties hautes et/ou basses de l'évaporateur 2 soient dépourvues de liquide. Ceci diminue considérablement les risques d'assèchement des parois latérales de l'évaporateur 2 ainsi que les risques d'augmentation de la température au niveau de ces parois sèches. Les contraintes thermiques et/ou mécaniques au sein du dispositif sont diminuées, la durée de vie et les performances du caloduc sont améliorées. Avantageusement, les risques d'assèchement des parois du canal d'évaporation 2a sont également considérablement diminués.

Préférentiellement, le condenseur 3 est divisé en au moins trois zones de condensation A, B, C. Préférentiellement, le condenseur 3 comprend de 3 à 8 zones de condensations. Encore plus préférentiellement, le condenseur 3 comprend de 3 à 5 zones de condensations.

Préférentiellement, au moins une partie des zones de condensation est disposée perpendiculairement à l'évaporateur et, plus particulièrement, au flux de vapeur.

Les zones d'évaporation sont séparées les unes des autres de sorte que le liquide condensé dans la première zone ne peut pas être utilisé dans la deuxième zone B et/ou dans la troisième zone C. Chacune des zones alimente une partie du canal d'évaporation.

La première zone de condensation A est configurée de manière à ce que le fluide à l'état liquide circule intégralement dans le canal d'évaporation. La deuxième zone de condensation B est configurée de manière à alimenter le premier canal de condensation 4. En d'autres termes, la première extrémité du premier canal de condensation 4 est connectée à la deuxième zone de condensation B. La troisième zone de condensation C est configurée de manière à alimenter le deuxième canal de condensation 5. En d'autres termes, la première extrémité du deuxième canal de condensation 5 est connectée à la troisième zone de condensation C.

Comme représenté sur la figure 3, les trois zones de condensation A, B, C sont disposées en série selon le sens de transit du fluide thermique depuis l'évaporateur vers une extrémité du condenseur. Le canal d'évaporation et le condenseur sont agencés dans une architecture en forme de « L » inversé.

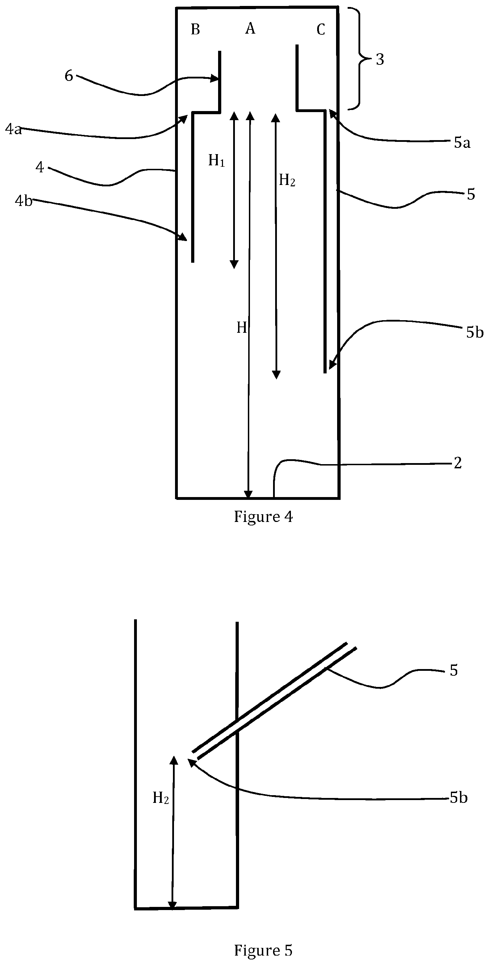

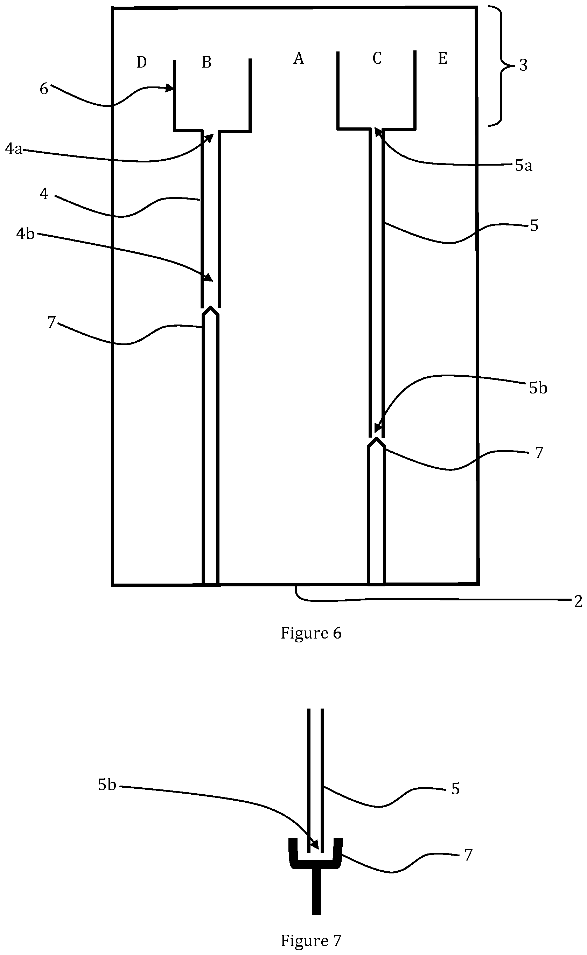

Selon un autre mode de réalisation, les zones de condensation B et C pourraient être disposées de part et d'autre de la zone de condensation A (figures 4 et 6). Cette architecture peut être dite en forme de « T » car le condenseur s'étend au-delà de la surface délimitée par le canal d'évaporation. Les deuxièmes extrémités des canaux de condensation seraient alors placées à différentes hauteurs dans le canal d'évaporation mais en plus en différentes positions sur la ou les parois latérales. Dans le cas d'un réservoir de section rectangulaire ou cubique, i.e. le cas où le canal d'évaporation présente quatre parois latérales, les deuxièmes extrémités des canaux de condensation seraient, avantageusement, disposées sur les parois latérales opposées. Dans le cas d'une section circulaire, les deuxièmes extrémités des canaux de condensation seraient, avantageusement, diamétralement opposées.

Selon un autre mode de réalisation, les zones de condensation pourraient être dans l'axe du flux de vapeur, empilées les unes au-dessus des autres, au-dessus de l'évaporateur. La structure aurait la forme d'un « I ».

La figure 3 représente un caloduc 1 dont le condenseur 3 est divisé en trois zones de condensation A, B, C.

Un élément de séparation 6 est, préférentiellement, disposé entre chaque zone de condensation. Le nombre d'éléments de séparation 6 est lié au nombre de zones de condensation.

Les éléments de séparation 6 permettent de bien délimiter les zones de condensation, d'isoler des fractions de condensat et de les diriger efficacement vers les canaux de condensation des zones de condensation correspondantes.

La première zone de condensation A est située directement au-dessus du canal d'évaporation ce qui permet d'avoir un dispositif compact. La première zone de condensation A est dépourvue de canal de condensation. Les condensats issus de cette zone A retombent directement dans l'évaporateur, par gravité. Le fluide s'écoule le long des parois du canal d'évaporation et permet d'alimenter en phase liquide la partie supérieure du canal d'évaporation.

La circulation de la vapeur et du liquide se fait à contre-courant. Cependant, comme le condensat est fractionné, grâce à la présence des autres zones de condensation, le volume de liquide, issu de la première zone de condensation A, est faible, les sections de passage de la phase liquide sont réduites et les problèmes d'entrainements sont limités.

Dans un mode de réalisation, un élément de séparation 6, 6' est disposé entre chaque zone de condensation de manière à empêcher le transfert du fluide thermique entre deux zones de condensation adjacentes.

Ainsi, la surface de la zone de condensation permet de définir la quantité de condensat généré et donc le débit massique de condensat dans le canal de condensation.

Dans une variante de réalisation, une zone de condensation peut être connectée à plusieurs canaux de condensation différents de manière à alimenter différentes zones du canal d'évaporation.

Le débit de fluide condensé est proportionnel à la surface de la zone condensation dont il provient. Le débit relatif de chaque zone de condensation est, avantageusement, maîtrisé en contrôlant la surface des zones de condensation.

Par surface de condensation, on entend la somme des surfaces des parois de d'une zone de condensation donnée sur lesquelles la vapeur peut se condenser.

Les parois des éléments de séparation 6, 6', une partie de la paroi supérieure du condenseur ou encore une partie de la paroi inférieure du condenseur sont des surfaces sur lesquelles la vapeur peut se condenser.

Avantageusement, chaque zone de condensation A, B, C présente une surface de condensation au moins égale à 10% de la surface totale de condensation du condenseur 3.

Cela permet de récupérer un volume de fluide suffisant pour hydrater la partie de l'évaporateur, disposée au niveau de chaque deuxième extrémité des canaux de condensation.

Lorsque les zones de condensation sont agencées en série (figure 3), la hauteur $H_x$ définissant la position de la deuxième extrémité des canaux de condensation selon le premier axe est définie par :

$$H_x = H. (100-S_{x-1})$$

Avec $H_x$ la hauteur du canal x, avec x un entier supérieur ou égal à 1,
H la distance entre l'évaporateur 2 et le condenseur 3,
$S_{x-1}$ la surface de la zone de condensation disposée en amont selon le sens de circulation du fluide et dissociée du canal de condensation x par au moins un élément de séparation, en pourcentage de la surface totale de condensation.

Dans l'exemple illustré à la figure 3, la zone de condensation A est au moins en partie dans le prolongement du canal d'évaporation. Il n'y a pas d'élément de séparation 6 et donc la hauteur est nulle. Le canal de condensation équivalent débouche en haut du canal d'évaporation.

La zone de condensation B est disposée après la zone de condensation A et les deux zones de condensation sont séparées par un élément de séparation. Si la zone de condensation A représente 20% de la surface totale, la sortie du premier canal de condensation est disposée à 20% de la hauteur totale entre le condenseur et l'évaporateur à partir du condenseur.

La zone de condensation C est disposée après les zones de condensation A et B. Les deux zones de condensation B et C sont séparées par un élément de séparation. Si les zones de condensation A et B représentent 60% de la surface totale, la sortie du premier canal de condensation est disposée à 60% de la hauteur totale entre le condenseur et l'évaporateur à partir du condenseur.

Le débit de condensat, issu de la première zone de condensation A, permettra d'irriguer le canal d'évaporation 2a sur une hauteur égale à au moins 20% de la hauteur totale.

A partir de la position de la deuxième extrémité 4b du premier canal de condensation 4, la fraction de liquide, issu de la deuxième zone de condensation B, permet à son tour d'irriguer le canal d'évaporation 2a sur une hauteur égale à au moins 40% de la hauteur totale.

A partir de ce point là, le canal d'évaporation 2a est irrigué par le condensat provenant de la troisième zone de condensation C. Cette fraction du condensat permet ensuite d'irriguer le canal d'évaporation sur une hauteur égale à 40% de la hauteur totale, jusqu'à la base du canal d'évaporation 2a.

Avec une telle répartition des fractions de condensat, chaque zone du canal d'évaporation 2a reçoit suffisamment de liquide pour que la paroi de l'évaporateur 2 soit alimentée en phase liquide, sur toute sa hauteur. Ceci permet de faciliter l'évaporation du liquide tout en limitant les risques d'assèchement. Les pertes thermiques sont limitées et les performances du caloduc sont améliorées.

Cette hauteur est donnée en pourcentage par rapport à la hauteur totale séparant l'évaporateur du condenseur.

Une organisation sensiblement équivalente peut être mise en oeuvre dans un caloduc tel que représenté à la figure 4.

Par exemple, la surface $S_0$ de la première zone de condensation A représente 20% de la surface totale de condensation du condenseur 3. La surface $S_0$ est représentée par les parois latérales des éléments de séparation et le fluide sous forme liquide se déplace le long des parois latérales jusqu'à atteindre les sorties 4b et 5b.

La surface $S_1$ de la deuxième zone de condensation B représente 40% de la surface totale de condensation du condenseur 3. La deuxième zone de condensation est connectée au premier canal de condensation 4 qui est débouche dans le canal d'évaporation 2a à une hauteur égale à 40% de la distance $H_1$ séparant le condenseur et l'évaporateur depuis le condenseur 3.

La surface $S_2$ de la troisième zone de condensation C représente 40% de la surface totale de condensation du condenseur 3. La troisième zone de condensation est connectée au deuxième canal de condensation 5 qui est débouche dans le canal d'évaporation 2a à une hauteur égale à 60% de la distance $H_2$ séparant le condenseur et l'évaporateur depuis le condenseur 3.

Selon un mode de réalisation particulier, comme représenté sur la figure 3, les deuxièmes extrémités 4b, 5b des canaux de condensation sont disposées au niveau de la paroi du canal d'évaporation 2a, le fluide condensé coule directement sur les parois du canal d'évaporation 2a jusqu'à l'évaporateur 2.

Selon une autre alternative, et comme représenté sur la figure 5, la deuxième extrémité 5b d'un canal de condensation 5 pourrait être en saillie par rapport à la paroi du canal d'évaporation 2a. Le fluide est amené vers le centre du canal d'évaporation 2a, plutôt que sur le bord.

Le canal d'évaporation peut avoir une section rectangulaire selon un plan perpendiculaire à un axe reliant l'évaporateur et le condenseur. Le canal d'évaporation est formé de deux grandes parois latérales, disposées face à face, et de deux petites parois latérales, disposées face à face. L'injection du condensat au centre dudit canal permet, avantageusement, une meilleure alimentation des deux grandes parois latérales en phase liquide. Les parois du canal sont mieux hydratées, dans cette configuration, par rapport à un dispositif où l'injection de la phase liquide se ferait au niveau d'une des petites parois. Le risque d'assèchement est réduit.

Selon une autre alternative, dans le cas d'un canal de section rectangulaire ou de toute autre section présentant au moins une paroi latérale d'une dimension très supérieure à une autre, la deuxième extrémité 5b du canal de condensation 5 est, avantageusement, disposée au niveau de la paroi de plus grande dimension.

Selon un autre mode de réalisation, comme représenté sur la figure 6, le canal de condensation est disposé dans une partie centrale du canal d'évaporation 2a. Le canal de condensation sépare deux canaux d'évaporation. Comme dans les modes de réalisation précédents, les différentes zones de condensation sont séparées par des éléments de séparation.

Dans le mode de réalisation illustré à la figure 6, au moins deux canaux de condensation sont disposés au centre du canal d'évaporation 2a de manière à former trois canaux d'évaporation.

La surface des échanges thermiques entre le canal d'évaporation 2a et l'extérieur est augmentée.

Selon un autre mode de réalisation particulier, comme représenté sur les figures 6 et 7, un élément d'obstruction 7 est disposé face à la deuxième extrémité d'au moins un canal de condensation de manière à séparer le fluide condensé en au moins deux parties distinctes. De préférence, l'élément d'obstruction est disposé en sortie du canal de condensation juste avant son injection dans l'évaporateur 2.

Dans un mode de réalisation, l'élément d'obstruction est configuré pour injecter du fluide thermique en phase liquide vers deux parties distinctes de l'évaporateur, c'est-à-dire deux parties séparées par un élément de séparation.

Les différents modes de réalisation peuvent être combinés entre eux.

Par exemple, comme représenté sur la figure 6, le dispositif caloduc comporte 5 zones de condensation A, B, C, D et E. La deuxième zone de condensation B et la troisième zone de condensation C sont chacune connectées à des canaux de condensation 4, 5, via les premières extrémités 4a, 5a desdits canaux.

Les canaux de condensation 4, 5 sont disposés au centre du canal d'évaporation de manière à faire tomber le condensat, par gravité, au centre de l'évaporateur.

Par au centre, on entend par exemple que les canaux ne sont pas en contact avec la ou les parois latérales du canal d'évaporation ou en périphérie du canal d'évaporation.

Au niveau de la deuxième extrémité 4b, 5b des canaux de condensation 4, 5, un élément d'obstruction 7 est disposé de façon à séparer le condensat en plusieurs parties. L'élément d'obstruction 7 peut être configuré de manière à séparer le fluide condensé sous la forme d'un Y. Dans ce cas, la séparation se fait, avantageusement, de manière égale entre les deux branches. L'élément d'obstruction 7 est agencé pour que le fluide initial se sépare en deux fluides dissociés.

Selon une autre alternative représentée à la figure 7, un réservoir peut être disposé au niveau de la deuxième extrémité d'un canal. Cela permet, avantageusement, de favoriser la répartition du fluide des deux côtés du canal et d'avoir une bonne répartition des débits.

Préférentiellement, les parois extérieures du caloduc sont définies par une première feuille et une deuxième feuille.

Les feuilles sont métalliques. Préférentiellement, elles sont en aluminium.

Les première et deuxième feuilles sont localement fusionnées entre elles. Les zones de fusion permettent de délimiter au moins le condenseur 3, l'évaporateur 2 et au moins deux canaux de condensation du fluide thermique 4, 5.

Préférentiellement, le caloduc 1 est utilisé pour réaliser un capteur solaire plan. Il pourrait également être utilisé pour réaliser un capteur à tubes sous vide.

Selon un autre mode de réalisation, le caloduc est utilisé pour réaliser un système de réfrigération ou un système de chauffage.

Il peut s'agir de systèmes réfrigérés de type cave à vin ou enceintes climatique, ou encore pour des systèmes de climatisation.

Préférentiellement, le caloduc est utilisé pour réaliser un capteur plan.

Un revêtement sélectif peut être déposé sur au moins une des faces extérieures du caloduc pour permettre une meilleure absorption du rayonnement solaire.

Par revêtement sélectif, on entend un revêtement permettant une absorption maximale de l'énergie solaire tout en réémettant le moins possible de rayonnement infrarouge.

L'énergie solaire est utilisée pour faire évaporer le fluide thermique.

Le condenseur du caloduc est en contact thermique avec un fluide caloporteur.

Le fluide caloporteur, plus froid que la vapeur du fluide thermique, se réchauffe à son contact. L'énergie ainsi accumulée va être transportée, grâce au fluide caloporteur, vers un collecteur. Le caloduc peut servir à chauffer un ballon d'eau par exemple.

La chaleur est transmise par conduction.

Le procédé de réalisation d'un caloduc 1 tel que défini précédemment comprend les étapes successives suivantes :

- fournir une première feuille et une deuxième feuille, lesdites feuilles étant métalliques,
- assembler les deux feuilles en fusionnant localement les deux feuilles métalliques, les zones de fusion délimitant au moins le condenseur 3, l'évaporateur 2, un canal d'évaporation 2a et au moins deux canaux de condensation du fluide thermique 4, 5.

L'assemblage des deux plaques est, préférentiellement, réalisé par laminage des deux feuilles. Il s'agit, plus particulièrement, d'un colaminage puisque les deux feuilles sont écrasées simultanément par les rouleaux d'un laminoir.

Selon une autre alternative, la première feuille et la deuxième feuille pourraient être à base d'une matière plastique. L'assemblage des deux feuilles pourrait être réalisé par fusion. Il peut s'agir d'une fusion grâce à une technique laser par exemple.

Avant l'étape d'assemblage des deux feuilles, une encre est déposée par sérigraphie, sur au moins la première feuille ou la deuxième feuille, les motifs sérigraphiés étant configurés pour former au moins le condenseur 3, l'évaporateur 2, un canal d'évaporation 2a et au moins deux canaux de circulation du fluide thermique 4, 5.

La forme et la taille des canaux, et des différents éléments sont définies lors du dépôt de l'encre par sérigraphie. De nombreuses géométries peuvent être envisagées.

Après l'étape d'assemblage, de l'air comprimé est injecté entre les deux feuilles, au niveau des motifs sérigraphiés, de manière à créer une surpression entre les deux plaques pour permettre la formation ultérieure d'au moins le condenseur 3, le canal d'évaporation 2a, l'évaporateur 2 et d'au moins deux canaux de circulation du fluide thermique 4, 5.

Le caloduc, ainsi obtenu, permet d'avoir du condensat, non seulement, dans la partie inférieure du canal d'évaporation, mais également dans les parties intermédiaires, entre l'évaporateur et le condenseur, et/ou dans la partie supérieure du canal d'évaporation. Le changement de phase liquide/vapeur se fait sur toute la longueur du canal, et pas uniquement dans la partie inférieure. Cette architecture est adaptée pour des caloducs de quelques dizaines de centimètres mais également pour des caloducs dont la longueur de l'évaporateur peut atteindre un mètre ou plus. Le capteur solaire plan et le capteur à tubes sous vide, utilisant un tel caloduc, présenteront de bonnes performances.

Plusieurs caloducs peuvent être disposés en série de manière à former un ensemble de caloducs.

Le caloduc 1 est préférentiellement plat. Il pourrait avoir toute forme appropriée.

**Revendications**

1.  Caloduc (1) par gravité comprenant :

    - un fluide thermique,
    - un évaporateur (2), configuré pour faire évaporer le fluide thermique,
    - un condenseur (3), configuré pour faire condenser le fluide thermique, l'évaporateur (2) et le condenseur (3) étant séparés d'une première distance H selon un premier axe reliant le condenseur (3) et l'évaporateur (2),
    - au moins un canal d'évaporation (2a) configuré pour faire circuler le fluide thermique en phase vapeur depuis l'évaporateur (2) vers le condenseur (3),
    - au moins deux canaux de condensation (4, 5) du fluide thermique configurés pour faire circuler le fluide thermique en phase liquide depuis le condenseur (3) vers l'évaporateur (2),

    chaque canal de condensation (4, 5) étant muni d'une première extrémité (4a, 5a) et d'une deuxième extrémité (4b, 5b),
    la première extrémité (4a, 5a) des canaux de condensation (4, 5) étant connectée au condenseur (3), de manière à collecter le fluide thermique condensé,
    la deuxième extrémité (4b, 5b) des canaux de condensation (4, 5) débouchant dans le canal d'évaporation, de manière à réinjecter le fluide thermique condensé dans ledit évaporateur (2),
    **caractérisé en ce que** la deuxième extrémité (4b) du premier canal (4) est positionnée à une hauteur $H_1$ dans le canal d'évaporation (2a),
    la deuxième extrémité (5b) du deuxième canal (5) est positionnée à une hauteur $H_2$ dans le canal d'évaporation (2a), les hauteurs $H_1$ et $H_2$ étant différentes selon le premier axe.

2.  Caloduc (1) selon la revendication 1, **caractérisé en ce que** le condenseur (3) est divisé en au moins trois zones de condensation (A, B, C),
    la première zone (A) de condensation étant dépourvue de canal de condensation, de sorte que les condensats issus de la première zone (A) de condensation retombent dans l'évaporateur (2) par gravité, de manière à ce que le fluide thermique condensé circule intégralement dans le canal de d'évaporation,
    la première extrémité (4a) du premier canal de condensation (4) étant connectée à la deuxième zone de condensation (B),
    la première extrémité (5a) du deuxième canal de condensation (5) étant connectée à la troisième zone de condensation (C), de manière à fractionner le volume de fluide thermique condensé.

3.  Caloduc (1) selon la revendication 2, **caractérisé en ce qu'**un élément de séparation (6, 6') est disposé entre chaque zone de condensation de manière à empêcher le transfert du fluide thermique entre deux zones de condensation adjacentes.

4.  Caloduc (1) selon l'une des revendications 2 et 3, **caractérisé en ce que** le condenseur (3) comprend de 3 à 8 zones de condensations.

5.  Caloduc (1) selon la revendication 4, **caractérisé en ce que** le condenseur (3) comprend de 3 à 5 zones de condensations.

6.  Caloduc (1) selon l'une quelconque des revendications 2 à 5, **caractérisé en ce que** chaque zone de condensation (A, B, C) présente une surface de condensation au moins égale à 10% de la surface totale de condensation du condenseur (3).

7.  Caloduc (1) selon l'une quelconque des revendications 2 à 6, **caractérisé en ce que** le condenseur (3) est divisé en trois zones de condensation (A, B, C), la surface de la première zone de condensation (A) représentant 20% de la surface totale de condensation du condenseur (3),
    la surface de la deuxième zone de condensation (B) représentant 40% de la surface totale de condensation du condenseur (3),
    la surface de la troisième zone de condensation (C) représentant 40% de la surface totale de condensation du condenseur (3).

8.  Caloduc (1) selon l'une quelconque des revendications 1 à 7, **caractérisé en ce qu'**un élément d'obstruction (7) est disposé au niveau de la deuxième extrémité d'au moins un canal de condensation de manière à séparer le fluide condensé en au moins deux parties distinctes.

9.  Caloduc (1) selon l'une quelconque des revendications 1 à 8, **caractérisé en ce qu'**au moins un canal de condensation est disposé à l'extérieur du canal d'évaporation (2a).

10. Caloduc (1) selon l'une quelconque des revendications 1 à 9, **caractérisé en ce qu'**au moins un canal de condensation est disposé au centre du canal d'évaporation (2a).

11. Caloduc (1) selon l'une quelconque des revendications précédentes, **caractérisé en ce que** les deuxièmes extrémités (4b, 5b) des canaux de condensation (4, 5) sont configurées pour déboucher dans le canal d'évaporation (2a) à distance de l'évaporateur (2), de manière à pouvoir humidifier les parois l'évaporateur (2) et au moins une partie de la ou des parois du canal d'évaporation (2a).

**12.** Caloduc (1) selon l'une quelconque des revendications précédentes, **caractérisé en ce qu'**au moins une partie d'un canal de condensation a une paroi commune avec une paroi de l'évaporateur (2).

**13.** Caloduc (1) selon l'une quelconque des revendications précédentes, **caractérisé en ce que** les parois extérieures du caloduc (1) sont définies par une première feuille et une deuxième feuille, lesdites feuilles étant métalliques et localement fusionnées entre elles, les zones de fusion délimitant au moins le condenseur (3), l'évaporateur (2), le canal d'évaporation (2a) et au moins deux canaux de condensation (4, 5) du fluide thermique.

**14.** Caloduc (1) selon la revendication précédente, **caractérisé en ce que** les feuilles sont en aluminium.

**15.** Caloduc (1) selon l'une quelconque des revendications précédentes, **caractérisé en ce que** le caloduc est dépourvu de réseau capillaire.

**16.** Utilisation d'un caloduc (1) selon l'une quelconque des revendications 1 à 15, pour réaliser un capteur solaire plan ou un capteur à tubes sous vide.

**17.** Utilisation d'un caloduc (1) selon l'une quelconque des revendications 1 à 15, pour réaliser un système de réfrigération ou un système de chauffage.

**18.** Procédé de réalisation d'un caloduc (1) par gravité selon l'une quelconque des revendications 1 à 15 comportant les étapes successives suivantes :

- fournir une première feuille et une deuxième feuille, lesdites feuilles étant métalliques,
- assembler les deux feuilles en fusionnant localement les deux feuilles métalliques, les zones de fusion délimitant au moins un condenseur (3), un évaporateur (2), un canal d'évaporation (2a) et au moins deux canaux (4, 5) de condensation du fluide thermique.

**Patentansprüche**

**1.** Schwerkraftwärmerohr (1) mit:

- einem Wärmefluid,
- einem Verdampfer (2), der zum Verdampfen des Wärmefluids ausgebildet ist,
- einem Kondensator (3), der zum Kondensieren des Wärmefluids ausgebildet ist, wobei der Verdampfer (2) und der Kondensator (3) in einem ersten Abstand H entlang einer ersten Achse voneinander getrennt sind, welche den Kondensator (3) und den Verdampfer (2) verbindet,
- mindestens einem Verdampfungskanal (2a), der zum Zirkulieren des Wärmefluids in der Dampfphase von dem Verdampfer (2) zu dem Kondensator (3) ausgeführt ist,
- mindestens zwei Kondensationskanälen (4, 5) des Wärmefluids, die zum Zirkulieren des Wärmefluids in der flüssigen Phase von dem Kondensator (3) zu dem Verdampfer (2) ausgeführt sind,

wobei jeder Kondensationskanal (4, 5) mit einem ersten Ende (4a, 5a) und einem zweiten Ende (4b, 5b) versehen ist,
wobei das erste Ende (4a, 5a) der Kondensationskanäle (4, 5) mit dem Kondensator (3) verbunden ist, um das kondensierte Wärmefluid aufzufangen,
wobei das zweite Ende (4b, 5b) der Kondensationskanäle (4, 5) in den Verdampfungskanal mündet, um das kondensierte Wärmefluid wieder in den Kondensator (2) einzuspritzen,
**dadurch gekennzeichnet, dass** das zweite Ende (4b) des ersten Kanals (4) auf einer Höhe $H_1$ in dem Verdampfungskanal (2a) positioniert ist,
das zweite Ende (5b) des zweiten Kanals (5) auf einer Höhe $H_2$ in dem Verdampfungskanal (2a) positioniert ist, wobei die Höhen $H_1$ und $H_2$ entlang der ersten Achse unterschiedlich sind.

**2.** Wärmerohr (1) nach Anspruch 1, **dadurch gekennzeichnet, dass** der Kondensator (3) in mindestens 3 Kondensationsbereiche (A, B, C) unterteilt ist, wobei der erste Kondensationsbereich (A) keinen Kondensationskanal aufweist, so dass die aus dem ersten Kondensationsbereich (A) stammenden Kondensate durch Schwerkraft derart in den Verdampfer (2) zurückfallen, dass das kondensierte Wärmefluid vollständig in dem Verdampfungskanal zirkuliert, wobei das erste Ende (4a) des ersten Kondensationskanals (4) mit dem zweiten Kondensationsbereich (B) verbunden ist, wobei das erste Ende (5a) des zweiten Kondensationskanals (5) mit dem dritten Kondensationsbereich (C) verbunden ist, um das Volumen des kondensierten Wärmefluids aufzuspalten.

**3.** Wärmerohr (1) nach Anspruch 2, **dadurch gekennzeichnet, dass** ein Trennelement (6, 6') zwischen jedem Kondensationsbereich angeordnet ist, um den Übergang des Wärmefluids zwischen zwei aneinander angrenzenden Kondensationsbereichen zu verhindern.

**4.** Wärmerohr (1) nach einem der Ansprüche 2 und 3, **dadurch gekennzeichnet, dass** der Kondensator (3) 3 bis 8 Kondensationsbereiche umfasst.

**5.** Wärmerohr (1) nach Anspruch 4, **dadurch gekennzeichnet, dass** der Kondensator (3) 3 bis 5 Kondensationsbereiche umfasst.

**6.** Wärmerohr (1) nach einem der Ansprüche 2 bis 5, **dadurch gekennzeichnet, dass** jeder Kondensationsbereich (A, B, C) eine Kondensationsfläche aufweist, die mindestens gleich 10% der gesamten Kondensationsfläche des Kondensators (3) ist.

**7.** Wärmerohr (1) nach einem der Ansprüche 2 bis 6, **dadurch gekennzeichnet, dass** der Kondensator (3) in drei Kondensationsbereiche (A, B, C) unterteilt ist, wobei die Fläche des ersten Kondensationsbereiches (A) 20% der gesamten Kondensationsfläche des Kondensators (3) darstellt, wobei die Fläche des zweiten Kondensationsbereiches (B) 40% der gesamten Kondensationsfläche des Kondensators (3) darstellt, wobei die Fläche des dritten Kondensationsbereiches (C) 40% der gesamten Kondensationsfläche des Kondensators (3) darstellt.

**8.** Wärmerohr (1) nach einem der Ansprüche 1 bis 7, **dadurch gekennzeichnet, dass** ein Hindernis (7) auf der Höhe des zweiten Endes von mindestens einem Kondensationskanal angeordnet ist, um das kondensierte Fluid in mindestens zwei verschiedene Bestandteile zu trennen.

**9.** Wärmerohr (1) nach einem der Ansprüche 1 bis 8, **dadurch gekennzeichnet, dass** mindestens ein Kondensationskanal außen an dem Verdampfungskanal (2a) angeordnet ist.

**10.** Wärmerohr (1) nach einem der Ansprüche 1 bis 9, **dadurch gekennzeichnet, dass** mindestens ein Kondensationskanal in der Mitte des Verdampfungskanals (2a) angeordnet ist.

**11.** Wärmerohr (1) nach einem der vorhergehenden Ansprüche, **dadurch gekennzeichnet, dass** die zweiten Enden (4b, 5b) der Kondensationskanäle (4, 5) so ausgeführt sind, dass sie in den Verdampfungskanal (2a) beabstandet von dem Verdampfer (2) münden, um die Verdampferwände (2) und zumindest einen Teil der Wand oder der Wände des Verdampfungskanals (2a) befeuchten zu können.

**12.** Wärmerohr (1) nach einem der vorhergehenden Ansprüche, **dadurch gekennzeichnet, dass** zumindest ein Teil eines Kondensationskanals eine Wand gemeinsam mit einer Wand des Verdampfers (2) aufweist.

**13.** Wärmerohr (1) nach einem der vorhergehenden Ansprüche, **dadurch gekennzeichnet, dass** die Außenwände des Wärmerohres (1) durch eine erste Folie und eine zweite Folie definiert sind, wobei die Folien metallisch und lokal begrenzt miteinander verschmolzen sind, wobei die Schmelzbereiche zumindest den Kondensator (3), den Verdampfer (2), den Verdampfungskanal (2a) und zumindest zwei Kondensationskanäle (4, 5) des Wärmefluids begrenzen.

**14.** Wärmerohr (1) nach dem vorhergehenden Anspruch, **dadurch gekennzeichnet, dass** die Folien aus Aluminium bestehen.

**15.** Wärmerohr (1) nach einem der vorhergehenden Ansprüche, **dadurch gekennzeichnet, dass** das Wärmerohr kein Kapillarnetz aufweist.

**16.** Verwendung eines Wärmerohres (1) nach einem der Ansprüche 1 bis 15, zur Herstellung eines Flachsonnenkollektors oder eines Vakuumröhrenkollektors.

**17.** Verwendung eines Wärmerohres (1) nach einem der Ansprüche 1 bis 15, zur Herstellung eines Kühlsystems oder eines Heizsystems.

**18.** Verfahren zur Herstellung eines Schwerkraftwärmerohres (1) nach einem der Ansprüche 1 bis 15 mit den aufeinanderfolgenden Schritten:

- Bereitstellen einer ersten Folie und einer zweiten Folie, wobei die Folien metallisch sind,
- Zusammensetzen der beiden Folien, indem die beiden metallischen Folien lokal begrenzt miteinander verschmolzen werden, wobei die Schmelzbereiche zumindest einen Kondensator (3), einen Verdampfer (2), einen Verdampfungskanal (2a) und mindestens zwei Kondensationskanäle (4, 5) des thermischen Fluids begrenzen.

**Claims**

**1.** Heat pipe (1) by gravity comprising:

- a thermal fluid,
- an evaporator (2) configured to make the thermal fluid evaporate,
- a condenser (3) configured to make the thermal fluid condense, the evaporator (2) and the condenser (3) being separated by a first distance H in a first direction connecting the condenser (3) and the evaporator (2),
- at least one evaporation channel (2a) configured to make the thermal fluid circulate in vapour phase from the evaporator (2) to the condenser (3),
- at least two condensation channels (4, 5) of the thermal fluid configured to make the thermal fluid circulate in liquid phase from the condenser (3) to the evaporator (2),

each condensation channel (4, 5) being provided with a first end (4a, 5a) and a second end (4b, 5b), the first end (4a, 5a) of the condensation channels (4, 5) being connected to the condenser (3) so as to collect the condensed thermal fluid, the second end (4b, 5b) of the condensation channels (4, 5) opening into the evaporation channel so as to reinject the condensed thermal fluid into said evaporator (2), **characterized in that** the second end (4b, 5b) of the first channel (4) is positioned at a height $H_1$ in the evaporation channel (2a), and the second end (5b) of the second channel (5) is positioned at a height $H_2$ in the evaporation channel (2a), the heights $H_1$ and $H_2$ being different in the first direction.

2. Heat pipe (1) according to claim 1, **characterized in that** the condenser (3) is divided into at least three condensation areas (A, B, C), the first condensation area (A) being devoid of a condensation channel so that the condensates originating from the first condensation area (A) fall back into the evaporator (2) by gravity so that the condensed thermal fluid circulates totally in the evaporation channel, the first end (4a) of the first condensation channel (4) being connected to the second condensation area (B), the first end (5a) of the second condensation channel (5) being connected to the third condensation area (C) so as to split the volume of condensed thermal fluid.

3. Heat pipe (1) according to claim 2, **characterized in that** a separating part (6, 6') is placed between each condensation area so as to prevent transfer of the thermal fluid between two adjacent condensation areas.

4. Heat pipe (1) according to one of claims 2 and 3, **characterized in that** the condenser (3) comprises from 3 to 8 condensation areas.

5. Heat pipe (1) according to claim 4, **characterized in that** the condenser (3) comprises from 3 to 5 condensation areas.

6. Heat pipe (1) according to any one of claims 2 to 5, **characterized in that** each condensation area (A, B, C) presents a condensation surface at least equal to 10% of the total condensation surface of the condenser (3).

7. Heat pipe (1) according to any one of claims 2 to 6, **characterized in that** the condenser (3) is divided into three condensation areas (A, B, C), the surface of the first condensation area (A) representing 20% of the total condensation surface of the condenser (3),

the surface of the second condensation area (B) representing 40% of the total condensation surface of the condenser (3), the surface of the third condensation area (C) representing 40% of the total condensation surface of the condenser (3).

8. Heat pipe (1) according to any one of claims 1 to 7, **characterized in that** an obstruction means (7) is placed at the level of the second end of least one condensation channel so as to separate the condensed fluid into at least two distinct parts.

9. Heat pipe (1) according to any one of claims 1 to 8, **characterized in that** at least one condensation channel is located outside the evaporation channel (2a).

10. Heat pipe (1) according to any one of claims 1 to 9, **characterized in that** at least one condensation channel is located in the centre of the evaporation channel (2a).

11. Heat pipe (1) according to any one of the foregoing claims, **characterized in that** the second ends (4b, 5b) of the condensation channels (4, 5) are configured to open into the evaporation channel (2a) at a distance from the evaporator (2) so as to be able to wet the walls of the evaporator (2) and at least a part of the wall or walls of the evaporation channel (2a).

12. Heat pipe (1) according to any one of the foregoing claims, **characterized in that** at least a part of a condensation channel has a common wall with the wall of the evaporator (2).

13. Heat pipe (1) according to any one of the foregoing claims, **characterized in that** the outer walls of the heat pipe (1) are defined by a first foil sheet and a second foil sheet, said sheets being made from metal and locally fused to one another, the fusion areas demarcating at least the condenser (3), the evaporator (2), the evaporation channel (2a) and at least two condensation channels (4, 5) of the thermal fluid.

14. Heat pipe (1) according to the foregoing claim, **characterized in that** the sheets are made from aluminium.

15. Heat pipe (1) according to any one of the foregoing claims, **characterized in that** the heat pipe is devoid of wick structure.

16. Heat pipe (1) according to any one of claims 1 to 15, for production of a flat solar sensor or a vacuum tube sensor.

17. Heat pipe (1) according to any one of claims 1 to 15, for production of a cooling system or a heating system.

18. Method for producing a heat pipe (1) by gravity according to any one of claims 1 to 15 comprising the following successive steps:

> - providing a first foil sheet and a second foil sheet, said sheets being made from metal,
> - assembling the two sheets by locally fusing the two metal sheets, the fusion areas demarcating at least a condenser (3), an evaporator (2), an evaporation channel (2a) and at least two condensation channels (4, 5) of the thermal fluid.

Figure 1 (art antérieur)

Figure 2 (art antérieur)

Figure 3

B     A     C

3

6

4a

4

$H_1$

4b

$H_2$

5a

5

H

5b

2

Figure 4

5

$H_2$

5b

Figure 5

D    B          A    C    E          3

6

4a                                    5a

4

4b

7

5

5b

7

2

Figure 6

5b          5

7

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012273167 A
- FR 2942030
- WO 2012176133 A